Europäisches Patentamt

European Patent Office

Office européen des brevets

(11) Veröffentlichungsnummer: **0 287 925 B1**

# (12) EUROPÄISCHE PATENTSCHRIFT

(45) Veröffentlichungstag der Patentschrift: **27.11.91**

(51) Int. Cl.⁵: **G02B 6/28**

(21) Anmeldenummer: **88105752.5**

(22) Anmeldetag: **12.04.88**

(54) **Faseroptischer Sternkoppler.**

(30) Priorität: **24.04.87 DE 3713658**

(43) Veröffentlichungstag der Anmeldung:
**26.10.88 Patentblatt 88/43**

(45) Bekanntmachung des Hinweises auf die
Patenterteilung:
**27.11.91 Patentblatt 91/48**

(84) Benannte Vertragsstaaten:
**AT DE FR GB NL**

(56) Entgegenhaltungen:
**FR-A- 2 298 237**
**GB-A- 2 112 166**
**US-A- 4 011 005**

**ELECTRONICS LETTERS, Band 15, Nr. 14, 5.
Juli 1979, Seiten 432-433, Steines, GB; E.G.
RAWSON et al.: "Bitaper star couplers with
up to 100 fibre channels"**

(73) Patentinhaber: **Licentia Patent-
Verwaltungs-GmbH
Theodor-Stern-Kai 1
W-6000 Frankfurt/Main 70(DE)**

(72) Erfinder: **Eisenmann, Michael
Eberlinweg 4
W-7900 Ulm(DE)**
Erfinder: **Weidel, Edgar
Hudlerstrasse 25
W-7913 Senden(DE)**

(74) Vertreter: **Schulze, Harald Rudolf, Dipl.-Ing. et
al
Licentia Patent-Verwaltungs-GmbH Theodor-
Stern-Kai 1
W-6000 Frankfurt/Main 70(DE)**

## Beschreibung

Die Erfindung betrifft einen faseroptischen Sternkoppler nach dem Oberbegriff des Patentanspruchs 1.

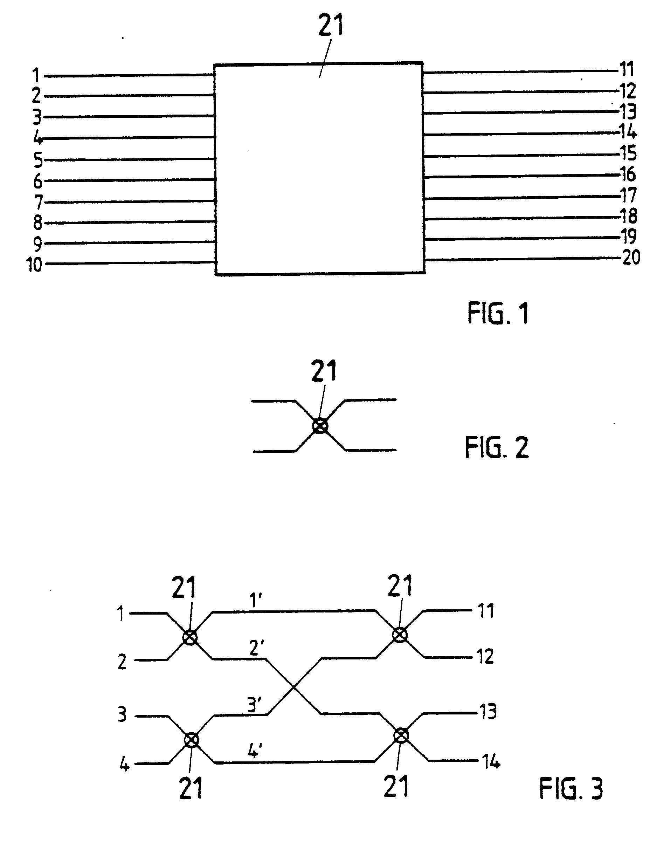

Derartige Sternkoppler werden z.B. für faseroptische Verteilnetze sowie für optische Datenbussysteme benötigt. Die Wirkungsweise eines solchen Sternkopplers wird anhand von Fig. 1 erläutert. Dabei sind Eingangslichtwellenleiter 1 bis 10 sowie Ausgangslichtwellenleiter 11 bis 20 mit einer optischen Koppelstelle 21 verbunden. Wird nun beispielsweise Licht in die Eingangslichtwellenleiter 1 bis 10 eingekoppelt, $P_1$ bis $P_{10}$ seien die zugehörigen EingangsLichtleistungen, so bewirkt die Koppelstelle 21 eine Mischung der Lichtleistungen $P_1$ bis $P_{10}$ derart, daß beispielsweise aus jedem der Ausgangslichtwellenleiter 11 bis 20 ein möglichst gleich großer Anteil von $P_1$ bis $P_{10}$ austritt, d.h. in jedem der Ausgangslichtwellenleiter 11 bis 20 wird die Einzel-Ausgangslichtleistung $P_1/10 + P_2/10 + ... + P_{10}/10$ geführt.

Aus der Druckschrift: E.G. Rawson, M.D. Bailey "Bitaper star couplers with up to 100 fibre channels", Electronics Letters, 5. Juli 1979, Vol. 15, Nr. 14, Seiten 432 bis 433, ist es bekannt, mehrere (bis zu 100) Multimode-Gradientenprofil-Lichtwellenleiter zu verdrillen. Anschließend wird die verdrillte Stelle derart erhitzt, daß die Lichtwellenleiter miteinander verschmelzen. Außerdem wird noch in Längsrichtung der Lichtwellenleiter eine mechanische Zugspannung erzeugt, so daß die Querschnitte der einzelnen Lichtwellenleiter verringert werden im Bereich der Koppelstelle (verdrillte und verschmolzene Stelle). Eine derartige Koppelstelle ist daher als Vollstab ausgebildet und daher aufgrund der internen Lichtverteilung nicht für die Anwendung bei Monomode-Lichtwellenleitern geeignet.

Sternkoppler für Monomode-Lichtwellenleiter sind derzeit wirtschaftlich interessant, z.B. bei der Verwendung für digitale hochauflösende Fernsehverteilnetze, da Monomode-Lichtwellenleiter gegenüber Multimode-Lichtwellenleiter eine wesentliche größere Übertragungsbandbreite besitzen und daher eine wesentlich größere Nachrichtenübertragungsrate, z.B. einige Gbit/sec, ermöglichen. Monomode-Lichtwellenleiter müssen insbesondere bei optischen Übertragungssystemen benutzt werden, die mit kohärentem Licht arbeiten.

Sternkoppler für Monomode-Lichtwellenleiter sind derzeit herstellbar durch faseroptische Verknüpfungen von sogenannten 2 x 2 faseroptischen Taperkopplern. Ein solcher 2 x 2 Taperkoppeler (Fig. 2) besteht aus zwei Eingangs-Lichtwellenleitern, wobei die in den Eingangs-Lichtwellenleitern ankommende Lichtleistung im wesentlichen gleichmäßig auf die Ausgangs-Lichtwellenleiter übertragen wird. Dieses wird durch Verschmelzen der Ein- und Ausgangs-Lichtwellenleiter im Bereich der Kopppelstelle 21 erreicht, wobei gleichzeitig die Querschnittsflächen der einzelnen Lichtwellenleiter verringert werden (Taper). Mit mehrerer solcher 2 x 2 Taperkoppler kann derzeit ein Monomode-Sternkoppler aufgebaut werden.

Fig. 3 zeigt als Beispiel den Aufbau eines solchen Monomode-Sternkopplers mit vier Monomode-Eingangslichtwellenleitern 1 bis 4 und vier Monomode-Ausgangs-Lichtwellenleitern 11 bis 14. Dabei werden zunächst die optischen Eingangskanäle 1 mit 2 bzw. 3 mit 4 gemischt. Es entstehen die Zwischenkanäle 1' bis 4'. Danach werden die Zwischenkanäle 1' mit 3' bzw. 2' mit 4' gemischt, so daß die Ausgangskanäle 11 bis 14 entstehen. Bei einer größeren Anzahl von Ein- sowie Ausgangskanälen wird in nachteiliger Weise eine erhebliche Anzahl von 2 x 2 Taperkopplern benötigt. Für $Z = 2^N$ Kanäle ist die Anzahl der benötigten 2 x 2 Taperkoppler gegeben durch $N.2^{N-1}$. Einige Beispiele: für $8 = 2^3$ Kanäle benötigt man zwölf 2 x 2 Taperkoppler, für $32 = 2^5$ Kanäle benötigt man achtzig 2 x 2 Taperkoppler. Diese 2 x 2 Taperkoppler müssen dann definiert und möglichst optisch verlustfrei miteinander verbunden werden, z.B. mit Hilfe von Spleißen, die durch Verschmelzen von Lichtwellenleitern in einem Lichtbogen hergestellt sind. Ein derartiger Sternkoppler ist daher in nachteiliger Weise kostenungünstig herstellbar und besitzt außerdem hohe störende Übertragungsverluste.

Der Erfindung liegt daher die Aufgabe zugrunde, einen gattungsgemäßen Sternkoppler anzugeben, der kostengünstig herstellbar ist und der insbesondere für Monomode-Lichtwellenleiter geeignet ist.

Diese Aufgabe wird gelöst durch das im kennzeichnenden Teil des Patentanspruchs 1 angegebene Merkmal. Vorteilhafte Ausgestaltungen und/oder Weiterbildungen sind den Unteransprüchen entnehmbar.

Ein erster Vorteil der Erfindung besteht darin, daß ein räumlich kleiner und mechanisch robuster Sternkoppler herstellbar ist.

Ein zweiter Vorteil besteht darin, daß lediglich eine Koppelstelle vorhanden ist. Dadurch werden optische Verluste vermieden. Es werden also keine zusätzlichen Spleißstellen benötigt.

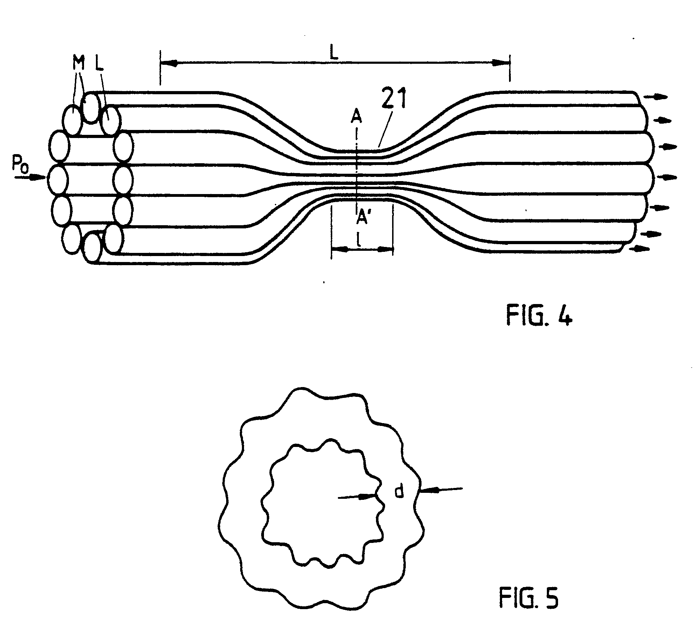

Die Erfindung wird im folgenden anhand eines Ausführungsbeispiels unter Bezugnahme auf die schematisch dargestellten Figuren 4 und 5 näher erläutert. Dabei zeigt Fig. 4 eine schematische, perspektivische Darstellung eines Sternkopplers für zwölf Monomode-Lichtwellenleiter und Fig. 5 einen Querschnitt durch die zugehörige Koppelstelle 21 an der mit A-A' bezeichneten Stelle.

Gemäß Fig 4 sind dabei die Mittelpunkte der Monomode-Lichtwellenleiter ML auf einem Kreiszylinder mit dem Durchmesser D angeordnet. Im Koppelbereich L ist bei den Lichtwellenleitern das sogenannte Primärcoating, d.h. die primäre Kunststoffbeschichtung, entfernt, z.B. auf einer Länge von ungefähr 20mm, so daß sich die (Quarzglas-)Mantelflächen der Lichtwellenleiter in der dargestellten Weise berühren. Diese werden nun mit abnehmendem Durchmesser D miteinander verschmolzen. Es entstehen ein sogenannter Taper sowie eine hohlzylinderförmige Koppelstelle 21. Diese besitzt eine von der Lichtwellenlänge abhängige Länge 1 von ungefähr 20mm. Die Überkopplung des Lichts erfolgt im engsten Bereich der Koppelstelle 21. In diesem engsten Bereich sind die Monomode (Quarzglas-)Lichtwellenleiter beispielsweise von einem ursprünglichen (Mantel-)Außendurchmesser von 125µm auf einen (Mantel-)Durchmesser d von 10µm bis 20µm dünngezogen. Die Führung des Lichts erfolgt dann nicht mehr durch die Kerne der Lichtwellenleiter sondern in deren Mantelbereichen, wobei die Grenzfläche Glas-Luft des Mantels gegenüber der Umgebungsluft maßgebend ist. Für die Lichtwellenleiter werden vorteilhafterweise (Quarzglas-)Monomode-Lichtwellenleiter mit einem sogenannten "matched cladding" benutzt. Speist man nun Licht der Leistung $P_0$ in einen Eingangs- Lichtwellenleiter ein, so werden im Bereich der Koppelstelle 21, deren Querschnitt in Fig. 5 dargestellt ist. Moden des entstandenen ringförmigen Wellenleiters mit gemeinsamer optischer Phase angeregt. Da diese Moden unterschiedliche Laufzeiten besitzen, geraten sie beim Weiterlaufen durch den ringförmigen Wellenleiter außer Phase. Die entstandenen Phasendifferenzen vergrößern sich kontinuierlich beim Weiterlaufen des Lichts durch den ringförmigen Wellenleiter. Unterscheiden sich diese Phasendifferenzen nun um ganzzahlige Vielfache von $2\pi$, so erhält man eine konstruktive Interferenz der Phasen und damit optische Abbildungen. Bei bestimmten Längen, welche durch die Phasendifferenzen der Moden in dem ringförmigen Wellenleiter vorgegeben sind, erhält man eine Abbildung des Lichts (Leistung $P_0$) aus dem Eingangslichtwellenleiter auf alle zwölf Ausgangslichtwellenleiter und zwar mit mit nahezu gleicher (Ausgangs-)Leistung von ungefähr $P_0/12$.

Dazu muß die Länge 1 während des Herstellungsvorganges genau eingestellt werden. Dieses geschieht durch Einkoppeln von Licht in einen Eingangs-Lichtwellenleiter während des (Taper-)Ziehvorganges. Dabei wird gleichzeitig die Ausgangslichtleistung von mindestens einem Ausgangs-Lichtwellenleiter gemessen. Ist die Lichtleistung über alle Ausgangslichtwellenleiter im wesentlichen gleich verteilt, so wird der (Taper-)Ziehvorgang abgebrochen, z.B. durch schnelles Entfernen und/oder Löschen der erforderlichen Schmelzflamme. Die gewünschte Gleichverteilung des Lichts auf die Ausgangslichtwellenleiter ist damit festgelegt und zeitstabil. Die Ankopplung des beschriebenen Sternkopplers an weiterführende Ein- und/oder Ausgangslichtwellenleiter kann mit derzeit üblichen Verfahren erfolgen, z.B. durch Verspleißen mit Hilfe eines Lichtbogens.

Da die erwähnte Abbildung innerhalb des ringförmigen Wellenleiters durch die Laufzeitdifferenzen der Moden bestimmt wird, die abhängig sind von der Wellenlänge des Lichts, ändert sich die einzustellende Länge 1 mit der Wellenlänge des verwendeten Lichts. Für optische Übertragungssystem mit geringen Wellenlängendifferenzen ist dieser Sachverhalt vernachlässigbar.

Die beschriebene Rotationssymmetrie der Anordnung bewirkt ferner folgendes: Ist für einen Eingangskanal eine Gleichverteilung auf alle Ausgangskanäle erreicht, so gilt dieses auch für alle übrigen Eingangskanäle.

**Patentansprüche**

1. Faseroptischer Sternkoppler, bestehend aus mindestens einem Eingangslichtwellenleiter, mehreren Ausgangslichtwellenleitern sowie einer Koppelstelle, in welcher die Ein- und Ausgangslichtwellenleiter miteinander verschmolzen sind, dadurch gekennzeichnet, daß die Koppelstelle (21) als Hohlzylinder ausgebildet ist.

2. Faseroptischer Sternkoppler nach Anspruch 1, dadurch gekennzeichnet, daß die Ein- und Ausgangslichtwellenleiter an der Koppelstelle (21) jeweils eine verringerte Querschnittsfläche besitzen gegenüber den übrigen Lichtwellenleiterbereichen.

3. Faseroptischer Sternkoppler nach Anspruch 1 oder Anspruch 2, dadurch gekennzeichnet, daß die Länge (1) sowie die Querschnittsfläche der Koppelstelle (21) derart ausgebildet sind, daß in die Ausgangslichtwellenleiter (11 bis 20) jeweils eine vorherbestimmbare Lichtleistung einkoppelbar ist.

4. Faseroptischer Sternkoppler nach einem der vorhergehenden Ansprüche, dadurch gekennzeichnet, daß in die Ausgangslichtwellenleiter (11 bis 20) im wesentlichen die gleiche Lichtleistung einkoppelbar ist.

5. Faseroptischer Sternkoppler nach einem der vorhergehenden Ansprüche, dadurch gekennzeichnet, daß zumindest die Ausgangslichtwellenleiter (11 bis 20) als Monomode-Lichtwellenleiter ausgebildet sind.

**6.** Faseroptischer Sternkoppler nach einem der vorhergehenden Ansprüche, dadurch gekennzeichnet, daß die Koppelstelle (21) im wesentlichen eine kreisringförmige Querschnittsfläche besitzt.

## Claims

**1.** Fibre-optical star coupler consisting of at least one input optical wave guide, several output optical wave guides as well as a coupling point, in which the input and output optical wave guides are merged together, characterised thereby, that the coupling point (21) is constructed as hollow cylinder.

**2.** Fibre-optical star coupler according to claim 1, characterised thereby, that the input and output optical wave guides each have a reduced cross-sectional area at the coupling point (21) by comparison with the remaining optical wave guide regions.

**3.** Fibre-optical star coupler according to claim 1 or claim 2, characterised thereby, that the length (1) as well as the cross-sectional area at the coupling point (21) are constructed in such a manner that a respective predeterminable light power is couplable into each of the output optical wave guides (11 to 20).

**4.** Fibre-optical star coupler according to one of the preceding claims, characterised thereby, that substantially the same light power is couplable into the output optical wave guides (11 to 20).

**5.** Fibre-optical star coupler according to one of the preceding claims, characterised thereby, that at least the output optical wave guides (11 to 20) are constructed as single-mode optical wave guides.

**6.** Fibre-optical star coupler according to one of the preceding claims, characterised thereby, that the coupling point (21) has substantially circularly round cross-sectional area.

## Revendications

**1.** Coupleur en étoile pour fibres optiques, comprenant au moins un guide d'ondes ou fibre optique d'entrée, plusieurs guides d'ondes ou fibres optiques de sortie, ainsi qu'un point de couplage dans lequel les fibres optiques d'entrée et de sortie sont fusionnées ou soudées ensemble, caractérisé en ce que le point de couplage (21) est réalisé sous la forme d'un cylindre creux.

**2.** Coupleur en étoile pour fibres optiques selon la revendication 1, caractérisé en ce que les fibres optiques d'entrée et de sortie possèdent chacune une aire de section réduite au point de couplage (21), comparativement à leurs autres parties.

**3.** Coupleur en étoile pour fibres optiques selon la revendication 1 ou 2, caractérisé en ce que la longueur (1) ainsi que l'aire de section du point de couplage (21) sont telles qu'une puissance optique pouvant être prédéterminée est injectable dans les fibres optiques de sortie (11 à 20).

**4.** Coupleur en étoile pour fibres optiques selon une des revendications précédentes, caractérisé en ce qu'une puissance optique essentiellement égale peut être injectée dans les fibres optiques de sortie (11 à 20).

**5.** Coupleur en étoile pour fibres optiques selon une des revendications précédentes, caractérisé en ce que les fibres optiques de sortie (11 à 20) au moins, sont constituées par des fibres optiques monomode.

**6.** Coupleur étoile pour fibres optiques selon une des revendications précédentes, caractérisé en ce que le point de couplage (21) possède une aire de section droite essentiellement en forme d'anneau de cercle.

FIG. 1

FIG. 2

FIG. 3

FIG. 4

FIG. 5